# EUROPEAN PATENT APPLICATION

(11) **EP 4 120 082 A1**
(43) Date of publication of application: **18.01.2023**
(21) Application number: 21779494.0
(22) Date of filing: 01.02.2021
(51) Int. Cl.: G06F 9/54

(54) **AUTOMOTIVE OPEN SYSTEM ARCHITECTURE, STATE MANAGEMENT METHOD, AND DEVICE**

(30) Priority: 31.03.2020 CN 202010247380
(71) Applicant: Huawei Technologies Co., Ltd., Shenzhen, Guangdong 518129 (CN)
(72) Inventor: CUI, Xiangyou, Shenzhen, Guangdong 518129 (CN)
(74) Representative: Gill Jennings & Every LLP
(86) International application number: PCT/CN2021/074632
(87) International publication number: WO 2021/196863

(57) **Abstract**

Embodiments of this application provide an automotive open system architecture, a state management method, and an apparatus. A state manager module is disposed in an application layer. An SWC may receive related information of BSW and an MCAL, and then summarize, by using a VFB, the related information to the state manager module for centralized processing. That is, a state management function is implemented in the application layer. Same events generated by different modules in the BSW may be abstracted as one event in the SWC, so that an event difference between modules obtained through subdivision in the B SW can be shielded. The architecture provided in embodiments of this application are applied to a smart vehicle and a new energy vehicle, and is easy to deploy and implement.

## Description

This application claims priority to Chinese Patent Application No. 202010247380.4, filed with the China National Intellectual Property Administration on March 31, 2020 and entitled "AUTOMOTIVE OPEN SYSTEM ARCHITECTURE, STATE MANAGEMENT METHOD, AND APPARATUS", which is incorporated herein by reference in its entirety.

### TECHNICAL FIELD

This application relates to communications technologies, and in particular, to an automotive open system architecture, a state management method, and an apparatus.

### BACKGROUND

An automotive open system architecture (automotive open system architecture, AUTOSAR) establishes an open standard of an automotive basic software architecture, and is widely applied to automotive electronic control systems. In the AUTOSAR architecture, if a change of a system state is caused after an event occurs, state management needs to be performed.

Usually, a state management function is implemented in a basic software layer. During state management, if an event comes from an application, an application layer needs to interact with the basic software layer for a plurality of times, and therefore implementation is relatively complex; or if an event comes from the basic software layer, because the basic software layer includes a relatively large quantity of modules obtained through subdivision, and events generated by the modules obtained through subdivision need to be processed in different manners, deployment for implementing state management is relatively difficult.

### SUMMARY

Embodiments of this application provide an automotive open system architecture, a state management method, and an apparatus, to reduce implementation difficulty of state management in the AUTOSAR architecture.

According to a first aspect, an embodiment of this application provides an automotive open system architecture, including an application layer, a runtime environment layer, and a basic software layer. A state manager module is disposed in the application layer. The application layer communicates with the basic software layer by using the runtime environment layer. The state manager module is configured to: receive an event from the application layer or the basic software layer; calculate, when the event meets a determining rule of the state manager module, a system state corresponding to the event; and deliver, when the system state corresponding to the event is different from a current system state of an automotive open system, state migration information that includes the system state corresponding to the event to one or more software components (software component, SWC) that need to perform state migration in the automotive open system, where the state migration information is used to indicate the one or more SWCs to perform state migration to the system state corresponding to the event. In this embodiment of this application, the state manager module is disposed in the application layer in the AUTOSAR architecture, and SWCs may receive related information of basic software (basic software, BSW), a microcontroller abstraction layer (microcontroller abstraction layer, MCAL), and the like, and then summarize the related information to the state manager module for centralized processing. That is, a state management function is implemented in the application layer. Same events generated by different modules in the BSW may be abstracted as one event in the SWC, so that an event difference between different modules in the BSW can be shielded. Therefore, it is easy to deploy and easy to implement.

In a possible design, the application layer communicates with the basic software layer by using a virtual functional bus (virtual functional bus, VFB) of the runtime environment layer, and the state manager module is specifically configured to distribute, by using the VFB, the state migration information to the one or more software components SWCs that need to perform state migration. The VFB can be used to isolate the upper application layer from the lower basic software layer, to support independence between software and hardware modules.

In a possible design, the state manager module is further configured to receive state migration feedback information from the one or more SWCs, where the state migration feedback information is used to feed back state migration statuses of the one or more SWCs. In this way, the state manager module can understand the state migration statuses of the SWCs. This is more conducive to state management.

In a possible design, the state manager module includes a finite state machine submodule. The state manager module is specifically configured to: when a state of the finite state machine submodule is an idle state, modify the state of the finite state machine submodule into a running state; calculate, by using the finite state machine submodule, the system state corresponding to the event; when the system state corresponding to the event is different from the current system state of the automotive open system, deliver the state migration information to the one or more SWCs by using the finite state machine submodule; and setting the state of the finite state machine submodule to the idle state. In this way, the finite state machine submodule can process one event each time, to ensure independence of single-time state updating.

In a possible design, the finite state machine submodule includes a state migration pre-processing unit, a state migration calculation unit, and a state migration post-processing unit. The state migration pre-processing unit is configured to: before the state migration information is delivered, determine that the one or more SWCs that need to perform state migration are in a state in which state migration can be performed. The state migration calculation unit is configured to calculate the system state corresponding to the event. The state migration post-processing unit is configured to deliver the state migration information to the one or more SWCs. In this way, efficiency of state migration can be improved.

In a possible design, the state manager module includes a runtime environment adaptation submodule and a state management context submodule. The runtime environment adaptation submodule is configured to adapt to the runtime environment layer. The state management context submodule is configured to store the event when the state manager module determines that the event is a valid event.

In a possible design, the state manager module is further specifically configured to select, when a plurality of events come from the application layer or the basic software layer, one of the plurality of events for processing. Therefore, a processing conflict between the events can be avoided.

In a possible design, the state manager module is further specifically configured to: when a plurality of events come from the application layer or the basic software layer, select one of the plurality of events for processing based on priorities of the plurality of events; or select one of the plurality of events for processing based on a receiving sequence of the plurality of events by using a first in first out rule.

In a possible design, an SWC receiving interface of the state manager module may be designed without considering an SWC difference, thereby simplifying a system interface design and reducing a quantity of interfaces.

In a possible design, an event from the basic software layer is abstracted as an event for which no distinguishing is performed between modules in the basic software layer that are obtained through subdivision. Therefore, a BSW difference can be shielded, so that state management is easy to implement.

According to a second aspect, an embodiment of this application provides a state management method, including: receiving an event from the application layer or the basic software layer; calculating, when the event meets a determining rule, a system state corresponding to the event; and delivering, when the system state corresponding to the event is different from a current system state of an automotive open system, state migration information that includes the system state corresponding to the event to one or more software components SWCs that need to perform state migration in the automotive open system, where the state migration information is used to indicate the one or more SWCs to perform state migration to the system state corresponding to the event.

In a possible design, the delivering state migration information that includes the system state corresponding to the event to one or more software components SWCs that need to perform state migration in the automotive open system includes: distributing the state migration information to the one or more software components SWCs by using a virtual functional bus VFB.

In a possible design, the method further includes: receiving state migration feedback information from the one or more SWCs, where the state migration feedback information is used to feed back state migration statuses of the one or more SWCs.

In a possible design, the calculating a system state corresponding to the event includes: when a state of a finite state machine submodule is an idle state, modifying the state of the finite state machine submodule into a running state; and calculating, by using the finite state machine submodule, the system state corresponding to the event; and the delivering, when the system state corresponding to the event is different from a current system state of an automotive open system, state migration information that includes the system state corresponding to the event to one or more software components SWCs that need to perform state migration in the automotive open system includes: when the system state corresponding to the event is different from the current system state of the automotive open system, delivering, by using the finite state machine submodule, the state migration information that includes the system state corresponding to the event to the one or more SWCs that need to perform state migration in the automotive open system; and setting the state of the finite state machine submodule to the idle state.

In a possible design, the method further includes: determining that the one or more SWCs that need to perform state migration are in a state in which state migration can be performed.

In a possible design, the calculating, when the event meets a determining rule, a system state corresponding to the event includes: calculating, when the event is a valid event, the system state corresponding to the event.

In a possible design, the module further includes: selecting, when a plurality of events come from the application layer or the basic software layer, one of the plurality of events for processing.

In a possible design, the selecting, when a plurality of events come from the application layer or the basic software layer, one of the plurality of events for processing includes: when a plurality of events come from the application layer or the basic software layer, selecting one of the plurality of events for processing based on priorities of the plurality of events; or selecting one of the plurality of events for processing based on a receiving sequence of the plurality of events by using a first in first out rule.

According to a third aspect, an embodiment of this application provides a state processing unit. The state processing unit is configured to perform the state management method described in any one of the second aspect to the possible designs of the second aspect.

According to a fourth aspect, an embodiment of this application provides a computer-readable storage medium. The computer-readable storage medium stores a computer program or instructions, and when the computer program or instructions runs or run on a computer, the computer is enabled to perform the state management method described in any one of the second aspect to the possible designs of the second aspect.

In conclusion, different from a common AUTOSAR architecture, in the AUTOSAR architecture in this embodiment of this application, the state manager module is disposed in the application layer, and the SWCs may receive the related information of the BSW and the MCAL, and then summarize, by using the VFB, the related information to the state manager module for centralized processing. That is, a state management function is implemented in the application layer. Same events generated by different modules in the BSW may be abstracted as one event in the SWC, so that an event difference between modules in the BSW that are obtained through subdivision can be shielded. Therefore, it is easy to deploy and easy to implement.

### BRIEF DESCRIPTION OF DRAWINGS

FIG. 1 is a schematic diagram of a common automotive open system architecture;
FIG. 2 is a schematic diagram of an automotive open system architecture according to an embodiment of this application;
FIG. 3 is a schematic diagram of an interface in an automotive open system architecture according to an embodiment of this application;
FIG. 4 is a schematic diagram of a structure of a state manager module according to an embodiment of this application; and
FIG. 5 is a schematic flowchart of a state management method according to an embodiment of this application.

### DESCRIPTION OF EMBODIMENTS

To clearly describe the technical solutions in embodiments of this application, words such as "first" and "second" are used in embodiments of this application to distinguish between same items or similar items that have basically the same functions or purposes. For example, a first event and a second event are merely intended to distinguish between different events, and are not intended to limit a sequence thereof. A person skilled in the art may understand that the terms such as "first" and "second" do not limit a quantity or an execution sequence, and the terms such as "first" and "second" do not indicate a definite difference.

It should be noted that, in this application, the term such as "example" or "for example" is used to represent giving an example, an illustration, or descriptions. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

In this application, "at least one" means one or more, and "a plurality of' means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

The method in embodiments of this application may be applied to an automotive electronic control system implemented based on an AUTOSAR system architecture idea.

The AUTOSAR architecture uses a hierarchical design. As an implementation of a virtual functional bus (virtual functional bus, VFB), a runtime environment layer isolates an upper application layer from a lower basic software layer, thereby getting rid of dependence on a hardware system during software development verification of an electronic control unit (electronic control unit, ECU), and supporting independence between software and hardware modules.

The VFB is an abstraction of underlying basic software and a network topology structure, and is a set of all communication mechanisms provided by the AUTOSAR. In an information data exchange process, an application is modeled as a software component (software component, SWC). When a system performs configuration, the software component is mapped to a specified ECU, and virtual connections between components are also mapped to various actual transmission buses. Finally, the software component implements communication by using a predefined port and the VFB.

In the AUTOSAR architecture, SWCs do not directly communicate with each other. After the lower-layer basic software is encapsulated by using a runtime environment, a runtime environment application programming interface (application programming interface, API) required for data communication is provided for the upper layer, and then interaction is performed by using, for example, a port, sender-receiver (Sender-Receiver) communication, or client-server (Client-Server) communication.

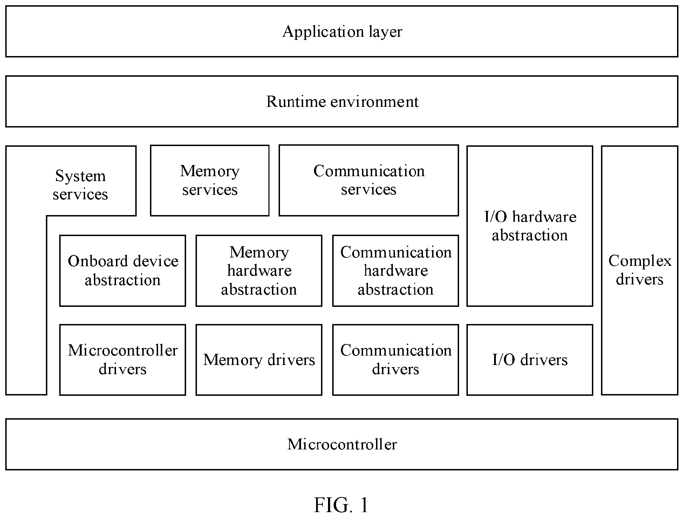

For example, FIG. 1 is a schematic diagram of a common AUTOSAR system architecture. As shown in FIG. 1, the AUTOSAR architecture is divided into three software layers at a highest abstraction level: an application layer (application layer), a runtime environment (runtime environment, RTE) layer, and a basic software (basic software, BSW) layer that runs on a microcontroller (microcontroller).

The RTE is a layer that provides a communication service for application software (for example, an AUTOSAR software component and/or an AUTOSAR sensor/actuator component). The AUTOSAR software component may communicate with another component (for example, an internal ECU and/or an internal ECU) or a service by using the RTE. The RTE may also be understood as implementation of a VFB interface on a single ECU, or may be understood as creation of an object in an object-oriented programming language.

The BSW is further divided into a services layer (services layer), an ECU abstraction layer (ECU abstraction layer), a microcontroller abstraction layer (microcontroller abstraction layer, MCAL), and a complex drives (complex drivers) layer. These layers obtained through subdivision may be referred to as modules of the BSW that are obtained through subdivision, or may be referred to as layers of the BSW that are obtained through subdivision.

The services layer is a highest layer of the basic software. The services layer is further divided into system services (system services), memory services (memory services), and communication services (communication services).

The ECU abstraction layer is further divided into onboard device abstraction (onboard device abstraction), memory hardware abstraction (memory hardware abstraction), communication hardware abstraction (communication hardware abstraction), and I/O hardware abstraction (I/O hardware abstraction).

The microcontroller abstraction layer is at a bottommost layer of the BSW, and includes internal drivers and the like. The microcontroller abstraction layer is further divided into microcontroller drivers (microcontroller drivers), memory drivers (memory drivers), communication drivers (communication drivers), and I/O drivers (I/O drivers).

From hardware to the RTE, a main task of the complex drivers is integrating non-standard functional modules with special purposes and building this part of functions in the AUTOSAR basic software layer, thereby implementing specific functions and time requirements for handling a complex sensor and an actuator. The complex drivers are closely related to a single-chip microcomputer and ECU hardware. An upper-layer program interface of the complex drivers is specified and implemented according to the AUTOSAR, and a lower-layer program interface of the complex drivers is limited by a standard interface program. The complex drivers can implement evaluation of the complex sensor and control of the actuator, for example, fuel injection control, solenoid valve control, and incremental position detection.

The BSW may be specifically configured to provide the following services. System: providing standardized specifications (for, for example, an operating system, a timer, and an error memory), ECU-specific services (for example, ECU state management and watchdog management), and a library function. Memory: standardizing access entries to an internal memory and an external memory (a nonvolatile memory). Communication: standardizing access entries to an automotive network system, an ECU communication system, and ECU internal software. Input/Output: standardizing access entries to a sensor, an actuator, and an ECU peripheral.

In the foregoing AUTOSAR architecture, the system services layer in the BSW includes an ECU state manager module, and may perform ECU state management based on the ECU state manager, for example, configure, after receiving an event message, the ECU state manager or the like to interact with another ECU underlying module, to implement state processing.

That is, in the common AUTOSAR architecture, a state management function is implemented in the BSW. During state management, if an event comes from an application, the application layer needs to interact with the underlying layer for a plurality of times, and therefore implementation is relatively complex; or if an event comes from the BSW layer, because as described above, a relatively large quantity of modules obtained through subdivision are disposed in the BSW layer, and events generated by the modules need to be processed in different manners, it is difficult to support a relatively large quantity of different events in the BSW layer.

Based on this, in embodiments of this application, a state manager module is disposed in an application layer in an AUTOSAR architecture, and SWCs may receive related information of BSW and an MCAL, and then summarize, by using a VFB, the related information to the state manager module for centralized processing. That is, a state management function is implemented in the application layer. Same events generated by different modules in the BSW may be abstracted as one event in the SWC, so that an event difference between different modules in the BSW can be shielded. Therefore, it is easy to deploy and easy to implement.

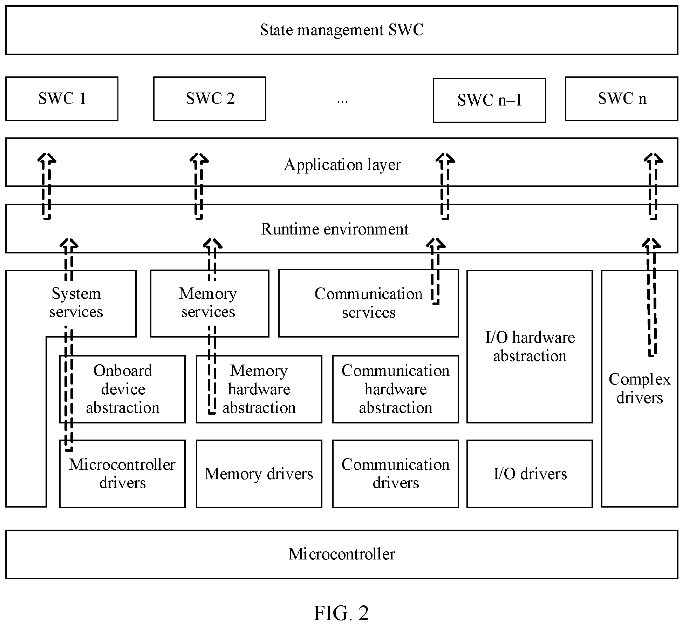

For example, FIG. 2 is a schematic diagram of an automotive open system architecture according to an embodiment of this application.

As shown in FIG. 2, in this embodiment of this application, a state manager module is disposed in an application layer, and SWCs may receive related information of BSW and an MCAL, and then summarize, by using a VFB, the related information to the state manager module for centralized processing.

For example, modules (for example, an ECU abstraction layer, a system service, and an I/O driver) in the BSW that are obtained through subdivision may interact with each SWC in the application layer by using an RTE. After obtaining related information in the BSW, each SWC may abstract an event, and interact with the state manager module SWC by using the VFB, to implement state management.

In a possible implementation, an event generated in the BSW may be abstracted as an event for which no distinguishing is performed between the modules in the BSW that are obtained through subdivision, so that a BSW difference can be shielded, so that state management is easy to implement. For example, it is assumed that a first event is generated in a services layer of the modules in the BSW that are obtained through subdivision, and a second event is generated in an ECU abstraction layer of the modules in the BSW that are obtained through subdivision. If a system state change triggered by the first event is the same as a system state change triggered by the second event, the first event and the second event may be abstracted as one event, and the event is related to only the BSW, without distinguishing between the services layer and the ECU abstraction layer of the modules obtained through subdivision.

In a possible implementation, events generated by a plurality of original equipment manufacturers (original equipment manufacture, OEM) and a plurality of sensors may be abstracted by using a concept similar to event abstraction of the modules in the BSW that are obtained through subdivision, to implement state management on the plurality of OEMs and the plurality of sensors. A specific application is not limited in this embodiment of this application.

In a possible implementation, a receiving interface of the state management SWC may be designed without considering an SWC difference, thereby simplifying a system interface design and reducing a quantity of interfaces.

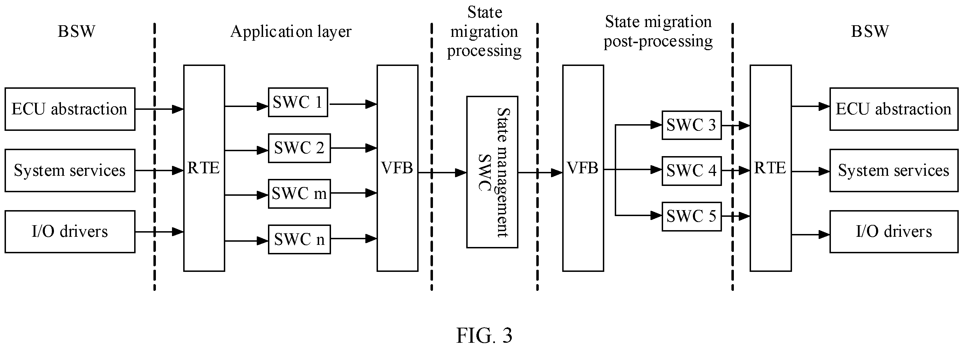

For example, FIG. 3 is a schematic diagram of an interface in an automotive open system architecture according to an embodiment of this application.

Modules (for example, an ECU abstraction layer, a system services layer, and an I/O drives layer) in BSW that are obtained through subdivision interact with an SWC 1 to an SWC n in an application layer by using an RTE, where n may be a natural number. After obtaining related information of the BSW, each SWC may abstract an event, and send an event to a state manager module SWC by using a VFB. The state manager module may determine whether the event is valid ("valid" may also be understood that the state manager module can identify the event); if the event is valid, may calculate a system state corresponding to the event; and if the system state corresponding to the event is different from a current system state of an automotive open system, may deliver, by using the VFB, state migration information to one or more SWCs that need to perform state migration post-processing. The state migration information may include the system state corresponding to the event. Each SWC may interact, by using the RTE, the modules (for example, the ECU abstraction layer, the system services layer, and the I/O drives layer) in the BSW that are obtained through subdivision and that need to perform state migration, to implement state management of the BSW.

For example, the system state corresponding to the current event may include a sleep state, an alarm state, a running state, or the like. After the state migration information that includes the system state corresponding to the event is delivered to the one or more SWCs in the automotive open system that need to perform state migration post-processing, each SWC may perform state migration based on logic of the SWC, so that the automotive open system can switch to the system state corresponding to the current event.

In a possible implementation, when the state manager module SWC receives a plurality of events, the state manager module SWC may manage the plurality of events through internal first in first out queuing (fist input fist output, FIFO), to avoid an event conflict.

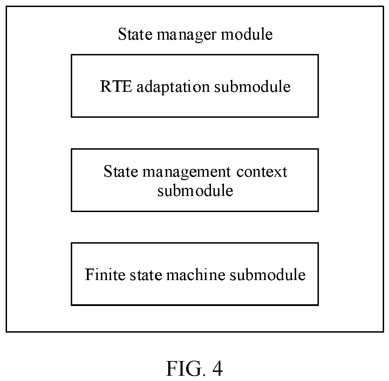

In a possible implementation, as shown in FIG. 4, the state manager module may include a runtime environment adaptation submodule (also referred to as an RTE adaptation submodule), a state management context submodule, and a finite state machine submodule (also referred to as a finite state machine).

For example, the runtime environment adaptation submodule may be configured to adapt to the runtime environment layer, so that the state manager module can communicate with the RTE.

For example, the state management context submodule may be configured to manage a context and store an event that meets a determining rule of the state manager module. The event that meets the determining rule may be a valid event that can be identified by the state manager module, or the like. This is not specifically limited in this embodiment of this application.

For example, the finite state machine submodule may be a mathematical model that represents a limited quantity of states and behavior such as transition and an action between these states. For example, the finite state machine may have the following characteristics: An event can be described by using a state; and at any moment, an event is always in one state, and an event may be transited from a state to another state by triggering some behavior of the event. A state change of an event is regular. A state A may be changed to B, and B may be changed to C. However, A possibly cannot be changed to C.

In a possible implementation, the finite state machine submodule may have two states: an idle state and a running state. When the finite state machine submodule processes an event, a state of the finite state machine submodule may be the running state. When the finite state machine submodule is idle, a state of the finite state machine submodule may be the idle state. For example, each time state updating is required due to occurrence of an event, the finite state machine submodule switches a state from the idle state (for example, the idle state may be represented by "idle") to the running state (for example, the running state may be represented by "running"), and performs state migration processing. After the processing, the finite state machine submodule switches back to the idle state. In this way, the finite state machine submodule can process one event each time, to ensure independence of single-time state updating.

In a possible implementation, the finite state machine submodule may be further divided into a state migration pre-processing unit, a state migration calculation unit, and a state migration post-processing unit. The state migration pre-processing unit is configured to: before the state migration information is delivered, determine that the SWCs that need to perform state migration are in a state in which state migration can be performed. The state migration calculation unit is configured to calculate the system state corresponding to the event. The state migration post-processing unit is configured to deliver the state migration information, for example, may notify, of the state migration information, modules that need to perform state migration, so that the modules can separately perform state migration, thereby improving state migration efficiency.

For example, when a radar in a vehicle is running, if it is found that a temperature of the radar is excessively high and the radar may fail if the radar continues running, an event that a temperature is excessively high and that is used to remind the finite state machine submodule that the finite state machine submodule needs to rest is generated. The event needs to trigger the finite state machine submodule to modify the radar to a sleep state, and the state migration calculation unit to calculate a state from which the radar needs to migrate to the sleep state. However, because the radar is executing a task, the state migration pre-processing unit may monitor that the radar completes execution of the current task, and then the state migration post-processing unit notifies other modules of state migration information, and each module migrates to the new state based on a status of the module.

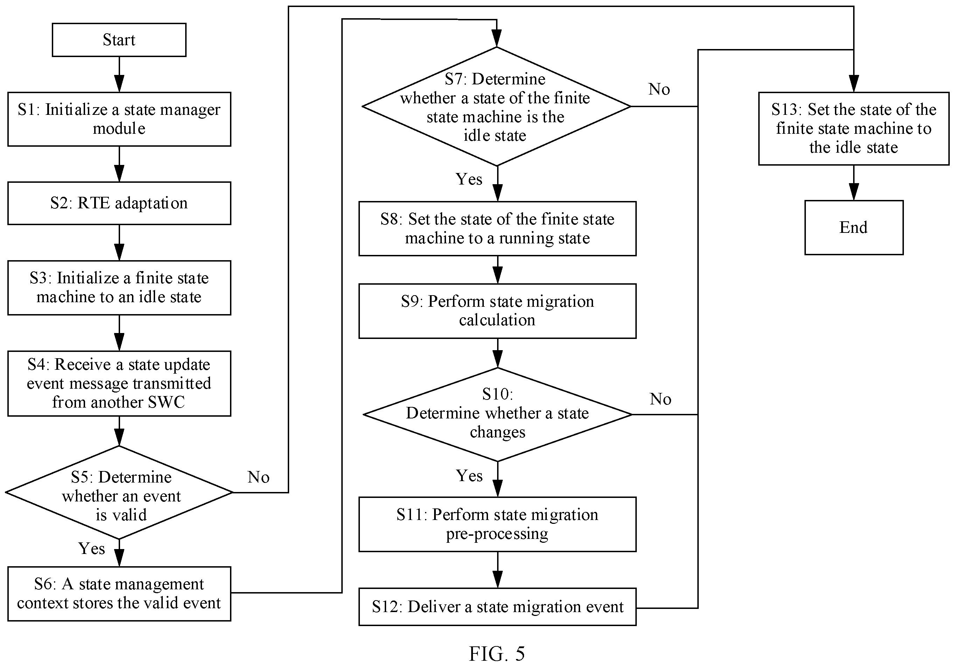

For example, FIG. 5 shows a state management method.

S1: Initialize a state manager module.

For example, when a vehicle is powered on, a context global variable, a flag bit, a registration function of each module, and the like in the state manager module may be initialized.

S2: Adapt the state manager module to an RTE.

For example, an RTE interface may be encapsulated in an application layer, so that the RTE interface can be invoked by the state manager module or the like.

S3: Initialize a finite state machine in the state manager module to an idle state.

S4: The state manager module receives a state update event message transmitted from another SWC.

For example, the state manager module may receive a message from the application layer or a basic software layer by using an SWC, where the message includes an event.

In a possible implementation, if a plurality of events are received, one of the plurality of events may be selected for processing based on priorities of the plurality of events. For example, an event with a highest priority may be selected for processing. Alternatively, one of the plurality of events may be selected for processing based on a receiving sequence of the plurality of events by using a first in first out rule. Therefore, a processing conflict between the plurality of events can be avoided.

S5: The state manager module determines whether the event is valid.

For example, if the state manager module can identify the event, the state manager module may consider that the event is valid, and perform S6 and subsequent steps; or if the state manager module cannot identify the event, the state manager module may consider that the event is invalid, and perform S13 and a subsequent step.

S6: A state management context submodule in the state manager module stores the valid event.

S7: Determine whether a state of the finite state machine in the state manager module is in the idle state.

For example, a state parameter of the finite state machine may be read, and it may be determined, based on the state parameter, whether the state of the finite state machine in the state manager module is the idle state. For example, if the state parameter is "idle", it may be determined that the state of the finite state machine in the state manager module is the idle state.

If the state of the finite state machine is the idle state, S8 and subsequent steps may be performed; or if the state of the finite state machine is not the idle state, S13 and the subsequent step may be performed.

S8: Set the state of the finite state machine to a running state.

For example, the state parameter of the finite state machine may be set to a parameter used to indicate the running state. For example, the state parameter of the finite state machine may be set to "running".

If a new event is subsequently received, because the state of the finite state machine is the running state, the new event is not processed, thereby avoiding a processing conflict between the events.

S9: The state manager module performs state migration calculation.

For example, the state manager module may calculate a system state corresponding to the event. A specific calculation process and specific content are not limited in this embodiment of this application.

S10: The state manager module determines whether a system state changes.

In a possible implementation, if occurrence of the event does not cause a change of the system state, that is, even if the event occurs, state migration does not need to be performed, S13 and the subsequent step may be performed.

In a possible implementation, if occurrence of the event causes a change of the system state, for example, the system state obtained in the migration calculation is different from the current system state, S11 and subsequent steps may be performed.

S11: The state manager module performs state migration pre-processing.

For example, the state manager module may detect whether modules that need to perform state migration meet a condition for performing state migration.

S12: The state manager module delivers state migration information.

For example, the state manager module may deliver, by using a VFB, the state migration information to the modules that need to perform state migration, and the modules may perform respective state migration.

In a possible implementation, the state manager module may further receive system state migration feedback from the one or more SWCs, to obtain state migration results of the modules.

S13. Set the state of the finite state machine to the idle state.

In this embodiment of this application, an optional step exists in the foregoing steps S1 to S13, and may be adaptively selected based on an actual application scenario.

In conclusion, different from the common AUTOSAR architecture, in the AUTOSAR architecture in this embodiment of this application, the state manager module is disposed in the application layer, and the SWCs may receive the related information of the BSW and the MCAL, and then summarize, by using the VFB, the related information to the state manager module for centralized processing. That is, a state management function is implemented in the application layer. Same events generated by different modules in the BSW may be abstracted as one event in the SWC, so that an event difference between modules in the BSW that are obtained through subdivision can be shielded. Therefore, it is easy to deploy and easy to implement.

In a possible implementation, an embodiment of this application provides a state processing unit. The state processing unit is configured to perform the state management method described in any one of the embodiment corresponding to FIG. 5 and the possible designs.

In a possible implementation, an embodiment of this application provides a computer-readable storage medium. The computer-readable storage medium stores a computer program or instructions, and when the computer program or instructions runs or run on a computer, the computer is enabled to perform the state management method described in any one of the embodiment corresponding to FIG. 5 and the possible designs.

Embodiments of this application are described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processing unit of another programmable data processing device to generate a machine, so that the instructions executed by the computer or the processing unit of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

In the several embodiments provided in this application, it should be understood that the disclosed apparatuses and methods may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor (processor) to perform a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. An automotive open system architecture, wherein the automotive open system architecture comprises an application layer, a runtime environment layer, and a basic software layer, a state manager module is disposed in the application layer, and the application layer communicates with the basic software layer by using the runtime environment layer; and
the state manager module is configured to:
receive an event from the application layer or the basic software layer;
calculate, when the event meets a determining rule of the state manager module, a system state corresponding to the event; and
deliver, when the system state corresponding to the event is different from a current system state of an automotive open system, state migration information that comprises the system state corresponding to the event to one or more software components SWCs that need to perform state migration in the automotive open system, wherein the state migration information is used to indicate the one or more SWCs to perform state migration to the system state corresponding to the event.

2. The automotive open system architecture according to claim 1, wherein the application layer communicates with the basic software layer by using a virtual functional bus VFB of the runtime environment layer, and the state manager module is specifically configured to:
distribute, by using the VFB, the state migration information to the one or more SWCs that need to perform state migration.

3. The automotive open system architecture according to claim 2, wherein the state manager module is further configured to:
receive state migration feedback information from the one or more SWCs, wherein the state migration feedback information is used to feed back state migration statuses of the one or more SWCs.

4. The automotive open system architecture according to any one of claims 1 to 3, wherein the state manager module comprises a finite state machine submodule, and the state manager module is specifically configured to:
when a state of the finite state machine submodule is an idle state, modify the state of the finite state machine submodule into a running state;
calculate, by using the finite state machine submodule, the system state corresponding to the event;
when the system state corresponding to the event is different from the current system state of the automotive open system, deliver the state migration information to the one or more SWCs by using the finite state machine submodule; and
set the state of the finite state machine submodule to the idle state.

5. The automotive open system architecture according to claim 4, wherein the finite state machine submodule comprises a state migration pre-processing unit, a state migration calculation unit, and a state migration post-processing unit;
the state migration pre-processing unit is configured to: before the state migration information is delivered, determine that the one or more SWCs that need to perform state migration are in a state in which state migration can be performed;
the state migration calculation unit is configured to calculate the system state corresponding to the event; and the state migration post-processing unit is configured to deliver the state migration information to the one or more SWCs.

6. The automotive open system architecture according to any one of claims 1 to 5, wherein the state manager module comprises a runtime environment adaptation submodule and a state management context submodule;
the runtime environment adaptation submodule is configured to adapt to the runtime environment layer; and
the state management context submodule is configured to store the event when the state manager module determines that the event is a valid event.

7. The automotive open system architecture according to any one of claims 1 to 6, wherein the state manager module is further specifically configured to:
select, when a plurality of events come from the application layer or the basic software layer, one of the plurality of events for processing.

8. The automotive open system architecture according to claim 7, wherein the state manager module is further specifically configured to:
when a plurality of events come from the application layer or the basic software layer, select one of the plurality of events for processing based on priorities of the plurality of events; or
select one of the plurality of events for processing based on a receiving sequence of the plurality of events by using a first in first out rule.

9. The automotive open system architecture according to any one of claims 1 to 8, wherein an SWC receiving interface of the state manager module may be designed without considering an SWC difference.

10. The automotive open system architecture according to any one of claims 1 to 9, wherein an event from the basic software layer is abstracted as an event for which no distinguishing is performed between modules in the basic software layer that are obtained through subdivision.

11. A state management method, comprising:
receiving an event from an application layer or a basic software layer;
calculating, when the event meets a determining rule, a system state corresponding to the event; and
delivering, when the system state corresponding to the event is different from a current system state of an automotive open system, state migration information that comprises the system state corresponding to the event to one or more software components SWCs that need to perform state migration in the automotive open system, wherein the state migration information is used to indicate the one or more SWCs to perform state migration to the system state corresponding to the event.

12. The method according to claim 11, wherein the delivering state migration information that comprises the system state corresponding to the event to one or more software components SWCs that need to perform state migration in the automotive open system comprises:
distributing the state migration information to the one or more software components SWCs by using a virtual functional bus VFB.

13. The method according to claim 12, further comprising:
receiving state migration feedback information from the one or more SWCs, wherein the state migration feedback information is used to feed back state migration statuses of the one or more SWCs.

14. The method according to any one of claims 11 to 13, wherein the calculating a system state corresponding to the event comprises:
when a state of a finite state machine submodule is an idle state, modifying the state of the finite state machine submodule into a running state; and
calculating, by using the finite state machine submodule, the system state corresponding to the event; and
the delivering, when the system state corresponding to the event is different from a current system state of an automotive open system, state migration information that comprises the system state corresponding to the event to one or more software components SWCs that need to perform state migration in the automotive open system comprises:
when the system state corresponding to the event is different from the current system state of the automotive open system, delivering, by using the finite state machine submodule, the state migration information that comprises the system state corresponding to the event to the one or more SWCs that need to perform state migration in the automotive open system; and
setting the state of the finite state machine submodule to the idle state.

15. The method according to claim 14, further comprising:
determining that the one or more SWCs that need to perform state migration are in a state in which state migration can be performed.

16. The method according to any one of claims 11 to 15, wherein the calculating, when the event meets a determining rule, a system state corresponding to the event comprises:
calculating, when the event is a valid event, the system state corresponding to the event.

17. The method according to any one of claims 11 to 16, further comprising:
selecting, when a plurality of events come from the application layer or the basic software layer, one of the plurality of events for processing.

18. The method according to claim 17, wherein the selecting, when a plurality of events come from the application layer or the basic software layer, one of the plurality of events for processing comprises:
when a plurality of events come from the application layer or the basic software layer, selecting one of the plurality of events for processing based on priorities of the plurality of events; or
selecting one of the plurality of events for processing based on a receiving sequence of the plurality of events by using a first in first out rule.

19. A state processing unit, wherein the state processing unit is configured to perform the state management method according to any one of claims 11 to 18.

20. A computer-readable storage medium, wherein the computer-readable storage medium stores instructions, and when the instructions are run, the state management method according to any one of claims 11 to 18 is implemented.

21. A computer program product, comprising a computer program, wherein when the computer program is executed by a processor, the state management method according to any one of claims 11 to 18 is implemented.
